# EUROPEAN PATENT SPECIFICATION

(11) **EP 2 537 739 B1**
(45) Date of publication and mention of the grant of the patent: **12.02.2014**
(21) Application number: 10846084.1
(22) Date of filing: 22.12.2010
(51) Int. Cl.: B62M 6/45

(54) **CONTROL METHOD FOR MOTOR OF ELECTRICALLY ASSISTED BICYCLE**
STEUERVERFAHREN FÜR DEN MOTOR EINES FAHRRADES MIT ELEKTRISCHEM HILFSMOTOR
PROCEDE DE COMMANDE DE MOTEUR DE VELO A ASSISTANCE ELECTRIQUE

(30) Priority: 19.02.2010 JP 2010034148
(43) Date of publication of application: 26.12.2012
(73) Proprietor: Panasonic Corporation, Kadoma-shi Osaka 571-8501 (JP)
(72) Inventor: EDATSUNE, Masamitsu, Osaka 540-6207 (JP); NAKAI, Yoshiaki, Osaka 540-6207 (JP); YOSHIMURA, Masaya, Osaka 540-6207 (JP)
(74) Representative: Grünecker, Kinkeldey, Stockmair & Schwanhäusser
(86) International application number: PCT/JP2010/007412
(87) International publication number: WO 2011/101944

(56) References cited:
- JP-A- 5 310 177
- JP-A- 9 109 983
- JP-A- 10 059 262
- JP-A- 10 114 292
- JP-A- 11 059 558
- JP-A- 11 079 062
- JP-A- 2000 062 681
- JP-A- 2000 103 382
- JP-A- 2000 103 383
- JP-A- 2001 122 184
- JP-A- 2004 314 753

## Description

### Technical Field

The present invention relates to a control method for the motor of an electrically assisted bicycle whose output is assisted by an electric motor.

### Background Art

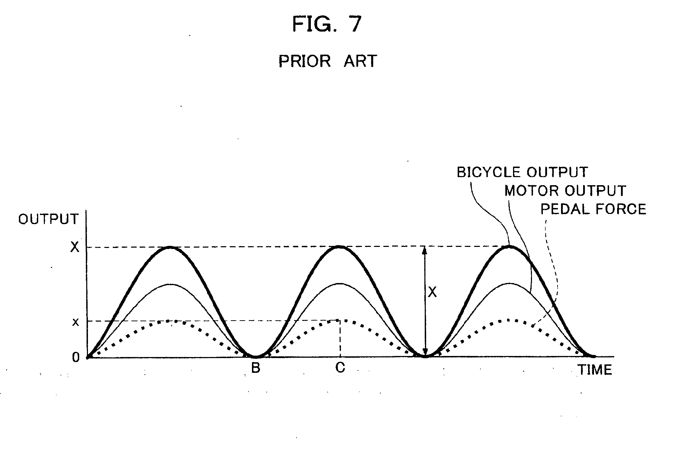

Referring to FIG. 7, a conventional control method for the motor of an electrically assisted bicycle will be described below.

FIG. 7 is a schematic diagram showing changes of a pedal force and a motor output according to the conventional motor control method.

As shown in FIG. 7, the bicycle output of the electrically assisted bicycle is the sum of the pedal force of a pedal and a motor output corresponding to the pedal force. Typically, a motor output changes an assist ratio according to the speed of a bicycle. FIG. 7 shows fluctuations in output with a constant speed.

In this way, a conventional electrically assisted bicycle is assisted by a motor output according to the pedal force of the pedal.

### Citation List

### Patent Literature

Patent Literature 1: Japanese Patent Laid-Open No. 2001-122184

### Summary of Invention

### Technical Problem

The pedal force of a pedal periodically varies depending on the circular motion of the pedal. Moreover, the output value of a motor output varies depending on the pedal force of the pedal and the output of a bicycle also periodically changes accordingly.

For example, at B in FIG. 7, the pedal force is 0 and the motor output and the bicycle output are also 0. At C, a bicycle output X is the sum of a maximum pedal force x and a motor output. Thus, the output of the bicycle traveling at a constant speed varies with a maximum range of X according to a periodic change of the pedal force. In the absence of assistance, the bicycle output has an amplitude of x, whereas in the presence of electrical assistance, the bicycle output has an amplitude of X, proving that the electrical assistance increases the amplitude of the bicycle output.

Thus, even when a rider intends to travel at a constant speed, the bicycle output is not stabilized (hereinafter, will be called instability), so that the electrical assistance may degrade ride comfort. Furthermore, fluctuations in bicycle output may cause a rider's body to swing back and forth and disrupt the balance of the body, disadvantageously impairing safety. Particularly, this problem becomes noticeable when the pedal force is increased under acceleration or on a slope and when an assist ratio increases.

In order to solve the problem, an object of a control method for the motor of an electrically assisted bicycle according to the present invention is to suppress an increase in the amplitude of a bicycle output even in the presence of electrical assistance.

### Solution to Problem

In order to attain the object, a control method for the motor of an electrically assisted bicycle according to the present invention includes: a pedal force measuring step of measuring a time varying change in the pedal force of a pedal and detecting the maximum value of the pedal force; a virtual pedal force calculating step of calculating a virtual pedal force from the pedal force, the virtual pedal force having a minimum value larger than the minimum value of the pedal force; a motor output calculating step of calculating a motor output by multiplying the virtual pedal force by a second coefficient; and a bicycle output calculating step of calculating a bicycle output as the driving force of the bicycle, the bicycle output being the sum of the pedal force and the motor output, wherein when the virtual pedal force increases, the pedal force and the virtual pedal force are matched with each other until the pedal force reaches the maximum value, the sum of virtual pedal forces is obtained by multiplying the sum of pedal forces by a first coefficient larger than 1 in a half turn of the pedal, and the first coefficient and the second coefficient are combined to be an assist ratio.

The virtual pedal force calculating step preferably includes: a first step of using the pedal force as the virtual pedal force until the pedal force reaches the maximum value of the pedal force; a second step of keeping the maximum value of the pedal force as the virtual pedal force for a predetermined hold time; a third step of estimating a virtual straight line that keeps the maximum value of the pedal force and then reduces the pedal force with a constant ratio; a fourth step of calculating an additional value by adding the pedal force and the value of the virtual straight line at each time; and a fifth step of using the maximum value of the pedal force as the virtual pedal force in a time period during which the additional value exceeds the maximum value of the pedal force, using the pedal force as the virtual pedal force in a time period during which the additional value is smaller than the pedal force, and using the additional value as the virtual pedal force in a time period during which the additional value is obtained between the maximum value of the pedal force and the pedal force.

In the fourth step, the virtual pedal force is preferably twice as large as the virtual straight line from a time when the pedal force exceeds the virtual straight line to a time when the pedal force exceeds the additional value.

When the hold time is determined, the control method preferably includes: calculating, as a first area, the sum of pedal forces from when the pedal force starts increasing to when the maximum value of the pedal force is detected; and determining the hold time such that a second area surrounded by the virtual pedal force kept at the maximum value of the pedal force, the virtual straight line, and the pedal force is an area obtained by multiplying the first area by a third coefficient.

The first coefficient may be 1.4 and the second coefficient may be 1.4.

The first coefficient may be 1.4, the second coefficient may be 1.4, and the third coefficient may be 0.8.

The first coefficient may be 1.4, the second coefficient may be 1.4, and the third coefficient may be 0.5.

In a traveling condition requiring detailed control of a vehicle speed, the third coefficient is preferably 0.5.

The traveling condition requiring detailed control of a vehicle speed may be decided depending on whether or not one of a vehicle speed, the number of rotations of the pedal, and a rate of change of a vehicle speed falls within a predetermined range.

Hence, even in the presence of electrical assistance, an increase in the amplitude of a bicycle output can be suppressed.

### Advantageous Effect of Invention

As has been discussed, when a bicycle travels with a periodically changing pedal force in the presence of electrical assistance, even in a period during which the pedal force decreases, a reduction in motor output can be suppressed and the amplitude of a bicycle output can be reduced by raising the minimum value of a virtual pedal force used for calculating the motor output.

### Brief Description of Drawings

[FIG. 1] FIG. 1 is a schematic diagram showing changes of a motor output and a bicycle output relative to a pedal force under the control of a motor control method according to the present invention.
[FIG. 2] FIG. 2 is an explanatory drawing of the motor control method according to a first embodiment.
[FIG. 3] FIG. 3 shows a calculation method of a virtual pedal force according to the present invention.
[FIG. 4] FIG. 4 is a flowchart showing the calculation method of a virtual pedal force according to the present invention.
[FIG. 5] FIG. 5 shows a calculation method of a virtual pedal force around a pedal force of 0 according to the present invention.
[FIG. 6] FIG. 6 is a flowchart showing the calculation method of a virtual pedal force around a pedal force of 0 according to the present invention.
[FIG. 7] FIG. 7 is a schematic diagram showing changes of a pedal force and a motor output according to a conventional motor control method.

### Description of Embodiments

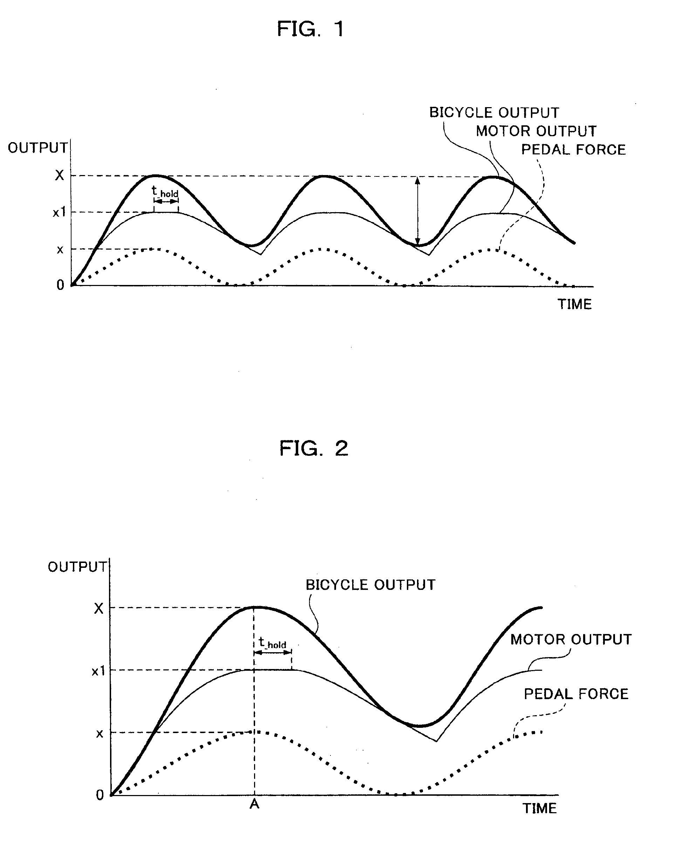

Referring to FIG. 1, a control method for the motor of an electrically assisted bicycle according to the present invention will be described below.

FIG. 1 is a schematic diagram showing changes of a motor output and a bicycle output relative to a pedal force under the control of the motor control method according to the present invention.

As shown in FIG. 1, a feature of the control method for the motor of an electrically assisted bicycle according to the present invention is that the output time of a peak of a motor output is delayed from a pedal force peak having a minimum or maximum value and the minimum value of the motor output is increased. The motor output depends on a periodic change of the pedal force of a pedal. At this point, the sum of the pedal force and the sum of the motor output in a half turn of the pedal are controlled to a constant ratio. The ratio is the sum of assist ratios in a half turn of the pedal.

In the present invention, a changing graph of actual pedal forces in a half turn of the pedal is first corrected to obtain a changing graph of virtual pedal forces with a minimum value increased. A virtual pedal force is then multiplied by a constant coefficient α to calculate a motor output, and the sum of the pedal force and the motor output is determined as a bicycle output for driving a bicycle. In the changing graph of virtual pedal forces, the sum of virtual pedal forces in a half cycle (corresponding to a half turn of the pedal) is obtained by multiplying the sum of pedal forces in a half cycle by a constant coefficient P larger than 1. Furthermore, the changing graph of virtual pedal forces is determined by correcting the changing graph of pedal forces so as to increase the minimum value of the pedal force. The sum of the coefficient α and the coefficient β is adjusted to an assist ratio.

Even in the presence of electrical assistance, a difference between a maximum value and a minimum value of the bicycle output can be reduced by increasing the minimum value of the motor output while keeping constant the sum of assist ratios in each half cycle of a periodic change of the pedal force. Thus, instability in traveling can be reduced to improve ride comfort and ensure safety.

Embodiments will be specifically described below, featuring a method of plotting a changing graph of virtual pedal forces.

### (First Embodiment)

As shown in FIG. 1, when a bicycle pedal is pressed, a pedal force periodically changes from 0 to a maximum value x. Typically, in an electrically assisted bicycle, an electric motor output determined by multiplying the pedal force by an assist ratio is added to driving of the bicycle to obtain a bicycle output, thereby assisting the driving force of the bicycle.

A feature of a control method for the motor of the electrically assisted bicycle according to the present invention is that, in order to reduce instability in traveling, the maximum value of the pedal force is kept for a predetermined time from the peak of the pedal force and a motor output is calculated from a virtual pedal force determined by increasing a minimum value of the motor output.

Referring to FIG. 2, a control method for a motor output will be schematically described below.

FIG. 2 is an explanatory drawing of a control method for a motor according to a first embodiment.

As shown in FIG. 2, a virtual pedal force is calculated by correcting a pedal force under predetermined conditions, which will be discussed later, and the virtual pedal force is multiplied by a constant assist ratio to obtain a motor output. First, the pedal is pressed when the pedal force is minimized in, for example, a stop state. Until time A when the pedal force reaches the maximum value x, the pedal force serves as a virtual pedal force and the motor output increases in proportion to the virtual pedal force. The motor output reaches x1 at A. The pedal force then decreases from x. In the present invention, even when the pedal force decreases from x, the virtual pedal force is kept at x and the motor output is kept at x1 for a predetermined time t__{hold}. After the predetermined time t__{hold}, a virtual pedal force is calculated using a straight line declining with time with a predetermined inclination, and then a motor output is calculated from the virtual pedal force. In the case where the pedal force then starts increasing to exceed the virtual pedal force declining with a constant inclination, the virtual pedal force is matched with the pedal force again. A motor output is then calculated from the determined virtual pedal force. In this way, until the pedal force increases to the maximum value, the virtual pedal force is matched with the pedal force. While the pedal force decreases, a virtual pedal force with an increased minimum value is calculated by correcting the pedal force. The thus determined virtual pedal force is multiplied by a constant coefficient α to calculate a motor output. Thus, the minimum value of the virtual pedal force can be increased without changing the maximum value of the motor output, thereby reducing a difference between a maximum value and a minimum value of a bicycle output that is the sum of the pedal force and the motor output. Hence, instability in traveling can be reduced to improve ride comfort and ensure safety.

In this case, the virtual pedal force used for calculating the motor output is determined such that the sum of virtual pedal forces in a half cycle is a value obtained by multiplying the sum of pedal forces in a half cycle by a constant coefficient β. In other words, since the declining inclination of the virtual pedal force is determined beforehand, the predetermined time t__{hold} can be determined such that the graph area representing the virtual pedal force in a half cycle is a value obtained by multiplying the graph area representing the pedal force in a half cycle by the coefficient β.

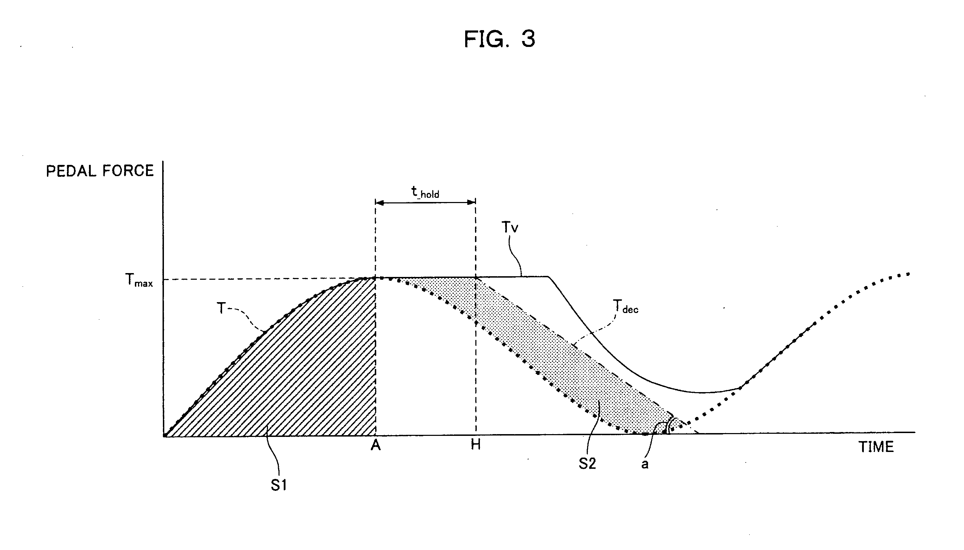

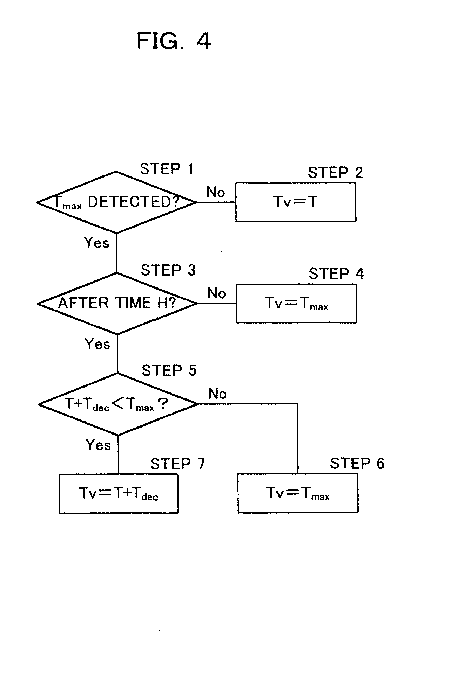

Referring to FIGS. 3 and 4, a specific example of the calculation of a virtual pedal force will be discussed below.

FIG. 3 shows a calculation method of a virtual pedal force according to the present invention. FIG. 4 is a flowchart showing the calculation method of a virtual pedal force according to the present invention.

As shown in FIGS. 3 and 4, first, the pedal force of the pedal is measured continuously or at any time to detect a maximum value Tₘₐₓ of the pedal force (step 1). Until time A when a pedal force T initially at a minimum value reaches the maximum value, a virtual pedal force Tv is matched with the pedal force T (step 2). In order to detect the maximum value Tₘₐₓ of the pedal force, the maximum value of the pedal force is updated during measurement. In the case where the maximum value has not been updated for a predetermined time, the value of the pedal force may be determined as the maximum value Tₘₐₓ of the pedal force and a time when the maximum value Tₘₐₓ is determined may be defined as time A. After time A, during the time t__{hold} determined by the foregoing method, that is, from time A to time H in FIG. 3, the virtual pedal force Tv is kept at Tₘₐₓ (steps 3 and 4).

From the virtual pedal force at time H, a virtual pedal force straight line T_{dec} is defined with a predetermined inclination of a. After time H, the virtual pedal force Tv is calculated using the straight line T_{dec}.

After time H, the sum of the straight line T_{dec} and the pedal force T is determined (step 5). While the sum is larger than the maximum value Tₘₐₓ, the virtual pedal force Tv is defined as Tₘₐₓ (step 6). When the sum is smaller than the maximum value Tₘₐₓ, the virtual pedal force Tv is the sum of T_{dec} and T (step 7) . After T_{dec} reaches 0, the pedal force T is determined again as the virtual pedal force Tv. The detection of the maximum value Tₘₐₓ of the pedal force and the calculation of Tv are repeated thereafter.

The thus determined virtual pedal force Tv is multiplied by the constant coefficient α to calculate a motor output, and the motor output is added to the pedal force T to obtain a bicycle output for driving a bicycle.

As has been discussed, even when the pedal force T is 0, the motor output is calculated using the virtual pedal force Tv that can ensure the virtual pedal force Tv which is at least equal to or larger than T_{dec}, and the sum of the pedal force T and the motor output can be determined as a bicycle output at that time to enable traveling of the bicycle. Since the minimum value of the bicycle output can be raised by increasing the minimum value of the motor output, the amplitude of a driving force determined by a pedal force can be reduced, leading to lower instability. Thus, instability in traveling can be reduced to improve ride comfort and ensure safety.

A specific example of the steps will be described below.

First, referring to FIG. 3, an example of a calculation method of the time t__{hold} will be specifically described below.

As shown in FIG. 3, first, a graph area S1 of the pedal force T is calculated in which the pedal force T starts increasing and reaches the maximum value Tₘₐₓ at time A. Next, the maximum value Tₘₐₓ is kept for the time t__{hold} from time A, and then the straight line T_{dec} declining with the predetermined inclination a is defined. The time t__{hold} is then calculated such that an area S2 surrounded by a straight line kept at the maximum value Tₘₐₓ, the straight line T_{dec}, and the graph representing the pedal force T is β' times as large as the area S1. In this case, β' is empirically obtained such that the graph area representing the virtual pedal force Tv, which is calculated thereafter, in a half cycle is equal to a value obtained by multiplying the graph area of the pedal force T in a half cycle by the coefficient β. Moreover, the virtual pedal force Tv and the motor output are calculated using the coefficient α, the coefficient β, and the coefficient β', so that the motor output is calculated by multiplying the pedal force T by a predetermined assist ratio. For example, in the case of α = 1.4, β = 1.4, and β' = 0.8, an assist ratio of about 2 can be obtained.

The inclination a will be discussed below. The inclination a of the straight line T_{dec} may be any predetermined inclination. Alternatively, an inclination empirically determined based on ergonomics is preferably used to achieve comfort ride. The inclination depends on a vehicle speed. For example, an inclination of 80 kg/s to 120 kg/s is preferable for 10 km/s to 20 km/s. The inclination can be set to about 100 kg/s.

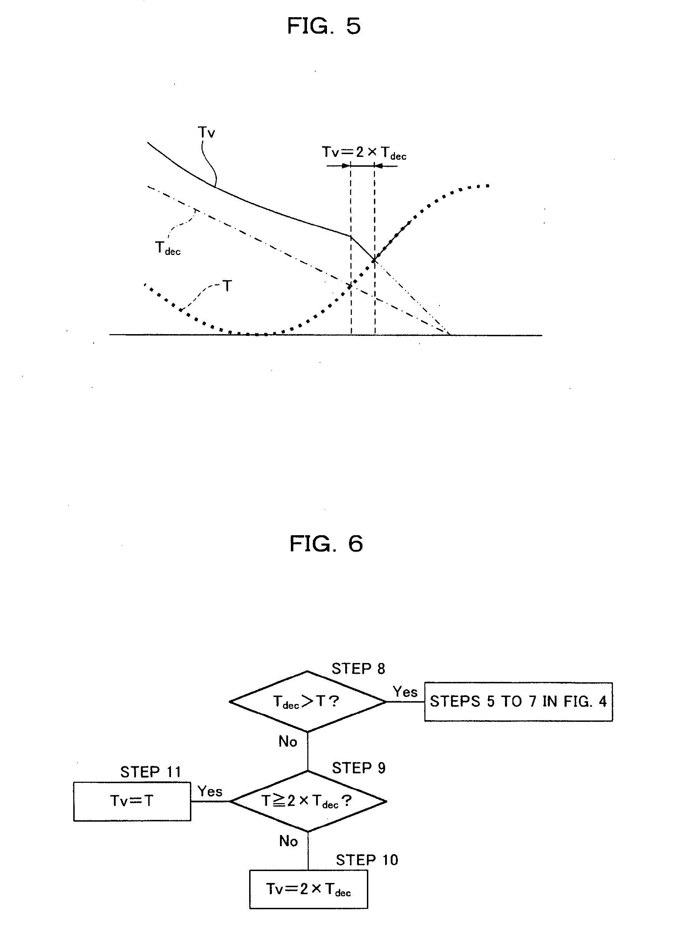

In the calculation method of the virtual pedal force Tv, the virtual pedal force Tv is matched with the pedal force T when the straight line T_{dec} is 0. Upon switching to the virtual pedal force Tv serving as the pedal force T, detailed control can be performed to reduce instability when switching. Referring to FIGS. 5 and 6, an example of control at this point will be described below.

FIG. 5 shows a calculation method of a virtual pedal force around a pedal force of 0 according to the present invention. FIG. 6 is a flowchart showing the calculation method of the virtual pedal force around the pedal force of 0 according to the present invention.

First, while the straight line T_{dec} is larger than the pedal force T, the virtual pedal force Tv is calculated during the control as in the above explanation of FIG. 4 (steps 5 to 7 in FIG. 4). After that, when the straight line T_{dec} is smaller than the pedal force T (step 8), the pedal force T and a value twice as large as T_{dec} are compared with each other (step 9). When the pedal force T is smaller than the value, Tv = 2 × T_{dec} is determined (step 10). When the pedal force T is larger than the value, Tv = T is determined (step 11). Thus, even in the case of the pedal force T around 0, the virtual pedal force Tv calculated thus can reduce instability upon switching to the virtual pedal force Tv serving as the pedal force T.

### (Second Embodiment)

In the first embodiment, when the virtual pedal force Tv is determined, the motor output holding time t_{_hold} is calculated such that the area ratio of the area S1 and the area S2 is, for example, S1:S2 = 1:0.8. However, during unstable traveling, for example, immediately after the start of traveling and detailed control of a vehicle speed, the area ratio is preferably controlled to be a smaller ratio, e.g., about S1:S2 = 1:0.5. The smaller the area ratio, the shorter the holding time t__{hold}. Thus, a motor output decreases more quickly with a reduction in pedal force and response to a pedal force improves, facilitating detailed control of a vehicle speed.

For example, at the start of traveling, a pedal force T serves as a virtual pedal force Tv as in the first embodiment until time A when the pedal force T reaches a maximum value. After that, a maximum value Tₘₐₓ of the pedal force is kept for a time t__{hold2}

Referring to FIG. 3, a calculation example of the time t__{hold2} according to the present embodiment will be described below.

As in the first embodiment, first, a graph area S1 of the pedal force T is calculated in which the pedal force T starts increasing and reaches the maximum value Tₘₐₓ at time A. Next, the maximum value Tₘₐₓ is kept for the time t__{hold2} from time A, and then a straight line T_{dec} declining with a predetermined inclination a is defined. The time t__{hold2} is then calculated such that an area S2 surrounded by a straight line kept at the maximum value Tₘₐₓ, the straight line T_{dec}, and the graph representing the pedal force T is β" times as large as the area S1. In this case, β" is smaller than β'. For example, when β' is 0.8, β" is about 0.5. The virtual pedal force Tv is then calculated as in the first embodiment. Furthermore, a motor output is calculated from the virtual pedal force Tv. The sum of the pedal force Tv and the motor output is a bicycle output.

In this example, the control method for the start of traveling was described. The second embodiment is also preferably implemented in unstable traveling. Such a condition is decided by using the number of rotations of a pedal and a rate of change in vehicle speed for a certain time from a speed of 0. Thus, the second embodiment can be implemented by automatically deciding unstable traveling.

For example, the control of the second embodiment may be performed from a speed of 0 for three seconds and then switched to the control of the first embodiment. Alternatively, the control of the first embodiment may be switched to the control of the second embodiment when a rate of change of the monitored number of rotations of the pedals or a monitored vehicle speed reaches at least a constant value. Furthermore, switching using a vehicle speed and the number of rotations and switching using a rate of change in vehicle speed may be combined.

As has been discussed, when detailed speed control is necessary while instability is reduced as in the first embodiment, the holding time of the maximum value of the virtual pedal force Tv is shortened to improve response to the pedal force of the pedal, facilitating detailed control of a vehicle speed. Thus, instability in traveling can be reduced to improve ride comfort and ensure high safety.

### Industrial Applicability

The present invention is useful for, for example, a control method for the motor of an electrically assisted bicycle, which can reduce the amplitude of a bicycle output even in the presence of electrical assistance and can assist the bicycle output by means of an electric motor.

## Claims

1. A control method for a motor of an electrically assisted bicycle, comprising:
a pedal force measuring step of measuring a time varying change in a pedal force of a pedal and detecting a maximum value of the pedal force;
a virtual pedal force calculating step of calculating a virtual pedal force from the pedal force, the virtual pedal force having a minimum value larger than a minimum value of the pedal force;
a motor output calculating step of calculating a motor output by multiplying the virtual pedal force by a second coefficient; and
a bicycle output calculating step of calculating a bicycle output as a driving force of the bicycle, the bicycle output being a sum of the pedal force and the motor output,
wherein when the virtual pedal force increases, the pedal force and the virtual pedal force are matched with each other until the pedal force reaches the maximum value, a sum of virtual pedal forces is obtained by multiplying a sum of pedal forces by a first coefficient larger than 1 in a half turn of the pedal, and the first coefficient and the second coefficient are combined to be an assist ratio, and
the virtual pedal force calculating step comprises:
a first step of using the pedal force as the virtual pedal force until the pedal force reaches the maximum value of the pedal force;
a second step of keeping the maximum value of the pedal force as the virtual pedal force for a predetermined hold time;
a third step of estimating a virtual straight line that keeps the maximum value of the pedal force and then reduces the pedal force with a constant ratio;
a fourth step of calculating an additional value by adding the pedal force and a value of the virtual straight line at each time; and
a fifth step of using the maximum value of the pedal force as the virtual pedal force in a time period during which the additional value exceeds the maximum value of the pedal force, using the pedal force as the virtual pedal force in a time period during which the additional value is smaller than the pedal force, and using the additional value as the virtual pedal force in a time period during which the additional value is obtained between the maximum value of the pedal force and the pedal force.

2. The control method for a motor of an electrically assisted bicycle according to claim 1, wherein in the fourth step, the virtual pedal force is twice as large as the virtual straight line from a time when the pedal force exceeds the virtual straight line to a time when the pedal force exceeds the additional value.

3. The control method for a motor of an electrically assisted bicycle according to claim 1, when the hold time is determined, the method comprising:
calculating, as a first area, the sum of pedal forces from when the pedal force starts increasing to when the maximum value of the pedal force is detected; and
determining the hold time such that a second area surrounded by the virtual pedal force kept at the maximum value of the pedal force, the virtual straight line, and the pedal force is an area obtained by multiplying the first area by a third coefficient.

4. The control method for a motor of an electrically assisted bicycle according to claim 1, wherein the first coefficient is 1.4 and the second coefficient is 1.4.

5. The control method for a motor of an electrically assisted bicycle according to claim 3, wherein the first coefficient is 1.4, the second coefficient is 1.4, and the third coefficient is 0.8.

6. The control method for a motor of an electrically assisted bicycle according to claim 3, wherein the first coefficient is 1.4, the second coefficient is 1.4, and the third coefficient is 0.5.

7. The control method for a motor of an electrically assisted bicycle according to claim 5, wherein in a traveling condition requiring detailed control of a vehicle speed, the third coefficient is 0.5.

8. The control method for a motor of an electrically assisted bicycle according to claim 7, wherein the traveling condition requiring detailed control of a vehicle speed is decided depending on whether or not one of a vehicle speed, the number of rotations of the pedal, and a rate of change of a vehicle speed falls within a predetermined range.

## Patentansprüche

1. Steuerverfahren für einen Motor eines Fahrrads mit elektrischem Hilfsmotor, umfassend:
einen Pedalkraft-Messungsschritt zum Messen einer zeitvarianten Änderung der Pedalkraft eines Pedals und Ermitteln eines Maximalwerts der Pedalkraft;
einen Berechnungsschritt einer virtuellen Pedalkraft zum Berechnen einer virtuellen Pedalkraft aus der Pedalkraft, wobei die virtuelle Pedalkraft einen Minimalwert aufweist, der größer als ein Minimalwert der Pedalkraft ist;
einen Motorleistungs-Berechnungsschritt zum Berechnen einer Motorleistung durch Multiplizieren der virtuellen Pedalkraft mit einem zweiten Koeffizienten; und
einen Fahrradleistungs-Berechnungsschritt zum Berechnen einer Fahrradleistung als eine Antriebskraft des Fahrrads, wobei die Fahrradleistung eine Summe der Pedalkraft und der Motorleistung ist,
wobei bei Zunahme der virtuellen Pedalkraft die Pedalkraft und die virtuelle Pedalkraft aufeinander abgestimmt werden, bis die Pedalkraft einen Maximalwert erreicht, eine Summe der virtuellen Pedalkräfte durch Multiplizieren einer Summe der Pedalkräfte mit einem ersten Koeffizienten größer 1 in einer halben Umdrehung des Pedals erhalten wird und der erste Koeffizient und der zweite Koeffizient zu einem Hilfsverhältnis kombiniert werden, und
der Berechnungsschritt der virtuellen Pedalkraft umfasst:
einen ersten Schritt des Verwendens der Pedalkraft als die virtuelle Pedalkraft, bis die Pedalkraft den Maximalwert der Pedalkraft erreicht;
einen zweiten Schritt des Haltens des Maximalwerts der Pedalkraft als die virtuelle Pedalkraft für eine vorgegebene Haltezeit;
einen dritten Schritt des Schätzens einer virtuellen geraden Linie, die den Maximalwert der Pedalkraft hält und die Pedalkraft dann mit einem konstanten Verhältnis reduziert;
einen vierten Schritt des Berechnens eines zusätzliches Werts durch Addieren der Pedalkraft und eines Werts der virtuellen geraden Linie zu jedem Zeitpunkt; und
einen fünften Schritt des Verwendens des Maximalwerts der Pedalkraft als die virtuelle Pedalkraft in einer Zeitspanne, in welcher der zusätzliche Wert den Maximalwert der Pedalkraft überschreitet, des Verwendens der Pedalkraft als die virtuelle Pedalkraft in einer Zeitspanne, in welcher der zusätzliche Wert kleiner als die Pedalkraft ist, und des Verwendens des zusätzlichen Werts als die virtuelle Pedalkraft in einer Zeitspanne, in welcher der zusätzliche Wert zwischen dem Maximalwert der Pedalkraft und der Pedalkraft erhalten wird.

2. Steuerverfahren für einen Motor eines Fahrrads mit elektrischem Hilfsmotor nach Anspruch 1, wobei in dem vierten Schritt die virtuelle Pedalkraft zweimal so groß ist wie die virtuelle gerade Linie ab einem Zeitpunkt, in dem die Pedalkraft die virtuelle gerade Linie überschreitet, bis zu einem Zeitpunkt, an dem die Pedalkraft den zusätzlichen Wert überschreitet.

3. Steuerverfahren für einen Motor eines Fahrrads mit elektrischem Hilfsmotor nach Anspruch 1, wobei wenn die Haltezeit bestimmt wird, das Verfahren umfasst:
Berechnen der Summe der Pedalkräfte ab der Zunahme der Pedalkräfte bis zur Ermittlung des Maximalwerts der Pedalkraft als einen ersten Bereich; und
Bestimmen der Haltezeit so, dass ein zweiter Bereich, der von der virtuellen Pedalkraft, die auf dem Maximalwert der Pedalkraft gehalten wird, der virtuellen geraden Linie und der Pedalkraft umgeben wird, ein Bereich ist, der durch Multiplizieren des ersten Bereichs mit einem dritten Koeffizienten erhalten wird.

4. Steuerverfahren für einen Motor eines Fahrrads mit elektrischem Hilfsmotor nach Anspruch 1, wobei der erste Koeffizient 1,4 ist und der zweite Koeffizient 1,4 ist.

5. Steuerverfahren für einen Motor eines Fahrrads mit elektrischem Hilfsmotor nach Anspruch 3, wobei der erste Koeffizient 1,4 ist, der zweite Koeffizient 1,4 ist und der dritte Koeffizient 0,8 ist.

6. Steuerverfahren für einen Motor eines Fahrrads mit elektrischem Hilfsmotor nach Anspruch 3, wobei der erste Koeffizient 1,4 ist, der zweite Koeffizient 1,4 ist und der dritte Koeffizient 0,5 ist.

7. Steuerverfahren für einen Motor eines Fahrrads mit elektrischem Hilfsmotor nach Anspruch 5, wobei bei einer Fahrtbedingung, welche eine ausführliche Steuerung der Fahrzeuggeschwindigkeit erfordert, der dritte Koeffizient 0,5 ist.

8. Steuerverfahren für einen Motor eines Fahrrads mit elektrischem Hilfsmotor nach Anspruch 7, wobei die Fahrtbedingung, welche eine ausführliche Steuerung einer Fahrzeuggeschwindigkeit erfordert, in Abhängigkeit davon bestimmt wird, ob eines der Merkmale Fahrzeuggeschwindigkeit, Anzahl der Pedalumdrehungen und Änderungsgeschwindigkeit einer Fahrzeuggeschwindigkeit in einen vorgegebenen Bereich fällt oder nicht.

## Revendications

1. Procédé de commande d'un moteur pour une bicyclette à assistance électrique, comprenant :
une étape de mesure de force sur la pédale consistant à mesurer une modification de variation de durée sur une force sur une pédale et à détecter une valeur maximale de la force sur la pédale,
une étape de calcul de force virtuelle sur la pédale consistant à calculer une force virtuelle sur la pédale à partir de la force sur la pédale, la force virtuelle sur la pédale présentant une valeur minimale plus grande que la valeur minimale de la force sur la pédale,
une étape de calcul de sortie vers le moteur consistant à calculer une sortie vers le moteur en multipliant la force virtuelle sur la pédale par un deuxième coefficient, et
une étape de calcul et de sortie vers la bicyclette consistant à calculer une sortie vers la bicyclette comme force d'entraînement de la bicyclette, la sortie vers la bicyclette étant la somme de la force sur la pédale et de la sortie vers le moteur,
dans lequel, lorsque la force virtuelle sur la pédale augmente, on fait correspondre l'une à l'autre la force sur la pédale et la force virtuelle sur la pédale jusqu'à ce que la force sur la pédale atteigne la valeur maximale, une somme des forces virtuelles sur la pédale étant obtenue en multipliant la somme des forces sur la pédale par un premier coefficient supérieur à 1 dans un demi-tour de la pédale, et le premier coefficient ainsi que le second coefficient sont combinés pour représenter un taux d'assistance, et
l'étape de calcul de la force virtuelle sur la pédale comprend :
une première étape consistant à utiliser la force sur la pédale comme force virtuelle sur la pédale jusqu'à ce que la force sur la pédale atteigne la valeur maximale de la force sur la pédale,
une deuxième étape consistant à conserver la valeur maximale de la force sur la pédale comme force virtuelle sur la pédale pendant un temps prédéterminé pendant un temps prédéterminé de rétention,
une troisième étape consistant à estimer la ligne droite virtuelle qui maintient la valeur maximale de la force sur la pédale puis réduit la force sur la pédale avec un taux constant,
une quatrième étape consistant à calculer une valeur supplémentaire en ajoutant chaque fois la force sur la pédale et une valeur de la ligne droite virtuelle, et
une cinquième étape consistant à utiliser la valeur maximale de la force sur la pédale comme force virtuelle sur la pédale dans un intervalle de temps pendant lequel la valeur supplémentaire dépasse la valeur maximale de la force sur la pédale, en utilisant la force sur la pédale comme force virtuelle sur la pédale dans un intervalle de temps pendant lequel la valeur supplémentaire est plus petite que la force sur la pédale, et en utilisant la valeur supplémentaire comme force virtuelle sur la pédale dans un intervalle de temps pendant lequel la valeur supplémentaire est obtenue située entre la valeur maximale de la force sur la pédale et la force sur la pédale.

2. Procédé de commande d'un moteur pour une bicyclette à assistance électrique selon la revendication 1, dans lequel, dans la quatrième étape, la force virtuelle sur la pédale vaut deux fois la ligne droite virtuelle à partir d'un instant où la force sur la pédale dépasse la ligne droite virtuelle jusqu'à un instant où la force sur la pédale dépasse la valeur supplémentaire.

3. Procédé de commande d'un moteur pour une bicyclette à assistance électrique selon la revendication 1, le procédé comprenant, lorsque le temps de rétention est déterminé :
le calcul, comme première zone, de la somme des forces sur la pédale à partir du moment où la force sur la pédale commence à augmenter jusqu'au moment où la valeur maximale de la force sur la pédale est détectée, et
la détermination du temps de rétention de telle sorte qu'une seconde zone, entourée par la force virtuelle sur la pédale maintenue à la valeur maximale de la force sur la pédale, la ligne droite virtuelle et la force sur la pédale, représente une zone obtenue en multipliant la première zone par un troisième coefficient.

4. Procédé de commande d'un moteur pour une bicyclette à assistance électrique selon la revendication 1, dans lequel le premier coefficient vaut 1,4 et le deuxième coefficient vaut 1,4.

5. Procédé de commande d'un moteur pour une bicyclette à assistance électrique selon la revendication 3, dans lequel le premier coefficient vaut 1,4, le deuxième coefficient vaut 1,4 et le troisième coefficient vaut 0,8.

6. Procédé de commande d'un moteur pour une bicyclette à assistance électrique selon la revendication 3, dans lequel le premier coefficient vaut 1,4, le deuxième coefficient vaut 1,6 et le troisième coefficient vaut 0,5.

7. Procédé de commande d'un moteur pour une bicyclette à assistance électrique selon la revendication 5, dans lequel dans un état du trajet demandant une régulation détaillée de la vitesse du véhicule, le troisième coefficient vaut 0,5.

8. Procédé de commande d'un moteur pour une bicyclette à assistance électrique selon la revendication 7, dans lequel l'état du trajet qui demande une régulation détaillée de la vitesse du véhicule est décidé en fonction ou non de la vitesse du véhicule, du nombre de rotations de la pédale, et le rythme de modification de la vitesse du véhicule se trouve dans une plage prédéterminée.
